# EUROPÄISCHE PATENTANMELDUNG

(11) **EP 1 293 402 A2**
(43) Veröffentlichungstag der Anmeldung: **19.03.2003**
(21) Anmeldenummer: 02020521.7
(22) Anmeldetag: 13.09.2002
(51) Int. Cl.: B60R 22/46

(54) **Gurtaufroller**

(30) Priorität: 17.09.2001 DE 20115316 U
(71) Anmelder: TRW Occupant Restraint Systems GmbH & Co. KG, 73553 Alfdorf (DE)
(72) Erfinder: Hönl, Wolf-Dieter, 73560 Böbingen (DE); Mödinger, Thomas, 73553 Alfdorf (DE)
(74) Vertreter: Sties, Jochen, Dipl.-Ing.

(57) **Zusammenfassung**

Gurtaufroller für einen Fahrzeugsicherheitsgurt, mit einem Rahmen (40), einer Gurtspule (10), die in dem Rahmen drehbar gelagert ist, einer Gurtspulenachse (12) mit einer Außenverzahnung (16), und einer Klinke (26), dadurch gekennzeichnet, daß der Gurtaufroller eine Rutschkupplung (22) aufweist, durch die die Klinke in die Außenverzahnung eingesteuert werden kann, um die Gurtspule zu drehen.

## Beschreibung

Die Erfindung betrifft einen Gurtaufroller für einen Fahrzeugsicherheitsgurt, mit einem Rahmen, einer Gurtspule, die in dem Rahmen drehbar gelagert ist, einer Gurtspulenachse mit einer Außenverzahnung, und einer Klinke.

Moderne Gurtaufroller sind neben den üblichen gurtband- und/oder fahrzeugsensitiven Sperrfunktionen oft mit Zusatzfunktionen ausgestattet. Eine dieser Zusatzfunktionen ist die vorsorgliche Gurtbandstraffung in einer kritischen Situation, z.B. bei einer Vollbremsung. Bei modernen Systemen kann die Straffung eines Gurtbands bei einem drohenden Fahrzeugaufprall durch einen Elektromotor, insbesondere einen Servomotor, erfolgen. Bei Verwendung eines leistungsstarken Elektromotorantriebs kann bei einer solchen Vorstraffung eine eventuell bestehende Gurtlose bereits vor einem Unfall entfernt werden, um das Verletzungsrisiko für Insassen zu minimieren. Außerdem wird die Wirkungsweise eines Gurtstraffers gegenüber einem herkömmlichen System verbessert werden.

Die Aufgabe der Erfindung besteht darin, einen Gurtaufroller zu schaffen, mit dem bei Einsatz eines Elektromotors eine rasche und zuverlässige Gurtstraffung ermöglicht wird.

Gemäß der Erfindung ist zu diesem Zweck bei einem Gurtaufroller der eingangs beschriebenen Art vorgesehen, daß der Gurtaufroller eine Rutschkupplung aufweist, durch die die Klinke in die Außenverzahnung eingesteuert werden kann, um die Gurtspule zu drehen. Die Rutschkupplung ermöglicht auch bei einer Verbindung des Gurtaufrollers mit vergleichsweise langsamen Antriebssystemen eine Einsteuerung der Klinken in die Außenverzahnung. Unter dem Begriff "Rutschkupplung" wird hierbei eine Verbindung verstanden, die von der eigentlichen Kupplung zwischen Außenverzahnung und Klinke verschieden ist.

In einer bevorzugten Ausführungsform weist der Rahmen ein Anschlagelement und die Rutschkupplung ein Rad und eine Kupplungsscheibe mit mehreren Zahnelementen auf, und eines der Zahnelemente kann mit dem Anschlagelement so zusammenwirken, daß dabei eine Relativdrehung zwischen der Kupplungsscheibe und dem Rad herbeigeführt werden kann. Das Rad mit den Zahnelementen und das Anschlagelement stellen besonders einfache Bauteile dar, die es erlauben, die Klinke unmittelbar in die Außenverzahnung einzusteuern.

Besonders vorteilhaft ist, wenn die Klinke in dem Rad gelagert ist und durch die Relativdrehung zwischen der Kupplungsscheibe und dem Rad in die Außenverzahnung eingesteuert werden kann, um die Gurtspule zu drehen. Anders als bei Kupplungen, bei denen eine Klinke durch Fliehkraft eingesteuert wird, wird hier erreicht, daß auch bei einer vergleichsweise langsamen Drehung des Rades die Klinke über die Kupplungsscheibe rasch in die Außenverzahnung der Gurtspulenachse eingesteuert wird. Darüber hinaus ist das Einsteuern der Klinke in die Außenverzahnung reversibel, wobei das Aussteuern der Klinke durch Zurückdrehen des Rades erreicht werden kann.

In einer Ausführungsform ist das Rad mit einem Motor, vorteilhafterweise mit einem Elektromotor, gekoppelt, der dann die Straffung des Gurtbandes bei einem drohenden Fahrzeugaufprall sicherstellen kann.

In einer weiteren Ausführungsform ist das Rad direkt mit dem Motor gekoppelt, was relativ hohe Rotationsgeschwindigkeiten des Rades ermöglicht.

In einer weiteren, besonders bevorzugten Ausführungsform ist das Rad über einen Riemen mit dem Motor gekoppelt, wodurch auch weniger leistungsstarke Motoren eingesetzt werden können.

Besonders vorteilhaft ist es, wenn das Rad ein Zahnrad ist, da in diesem Fall eine besonders gute Kraftübertragung zwischen Motor und Rad erreicht werden kann.

Weitere Merkmale und Vorteile der Erfindung ergeben sich aus der folgenden Beschreibung einer bevorzugten Ausführungsform und aus den beigefügten Zeichnungen, auf die Bezug genommen wird. In den Zeichnungen zeigen:
- Figur 1 eine Explosionszeichnung des Gurtaufrollers;
- Figur 2 eine Seitenansicht des Gurtaufrollers mit Antriebssystem;
- Figur 3a bis 3d den Gurtaufroller in teilweise geschnittener Seitenansicht in einer Ausgangsposition (3a), einer ersten Zwischenstellung (3b), einer zweiten Zwischenstellung (3c) und einer Endposition (3d).

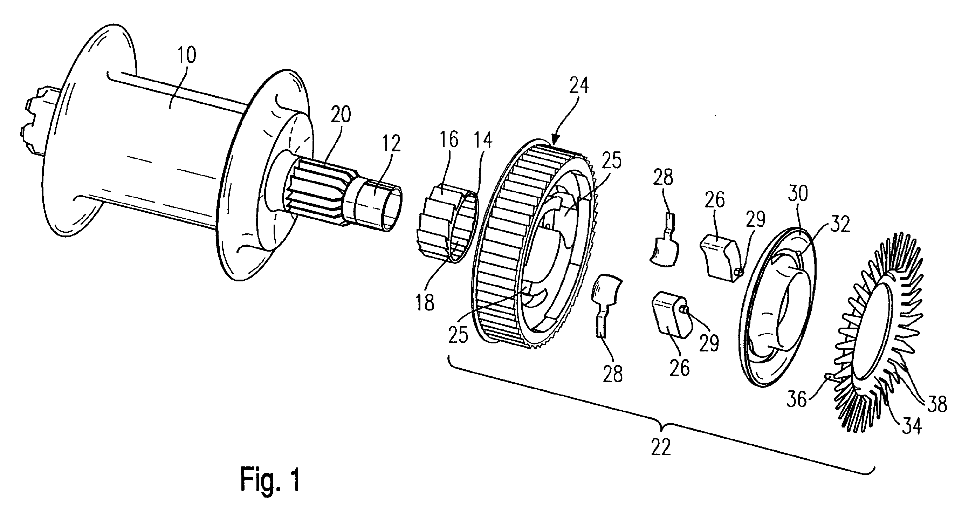

Die Explosionszeichnung in Figur 1 zeigt einen Gurtaufroller für einen Fahrzeugsicherheitsgurt mit einer Gurtspule 10, einer Gurtspulenachse 12, einem Zahnring 14 mit einer Außenverzahnung 16 und einer Innenverzahnung 18, die zusammen mit einer Gurtspulenachsenverzahnung 20 eine drehfeste Verbindung des Zahnrings mit der Gurtspulenachse ermöglicht. Diese Gestaltung erlaubt einerseits eine besonders sichere Positionierung des Zahnrings 14, ermöglicht aber andererseits auch den einfachen Austausch des Zahnrings bei Verschleiß der Außenverzahnung 16. Der Gurtaufroller weist ferner eine Rutschkupplung 22 auf, die ein Rad 24 mit Taschen 25 umfaßt. In die Taschen sind Klinken 26 mit Rückstellfedern 28 eingesetzt. Jede Klinke ist schwenkbar in einer Klinkenachse 29 gelagert. Die Rutschkupplung 22 ist mit einer Abdeckung 30, die Durchbrüche 32 aufweist, abgeschlossen. Eine Kupplungsscheibe 34 ist mit (nicht dargestellten) Bajonettverbindungen drehbar in die Abdeckung 30 eingehängt und über Verbindungselemente 36 mit den Klinken 26 verbunden. Die Kupplungsscheibe 34 weist über ihren gesamten Außenumfang hinweg flexible Zahnelemente 38 auf.

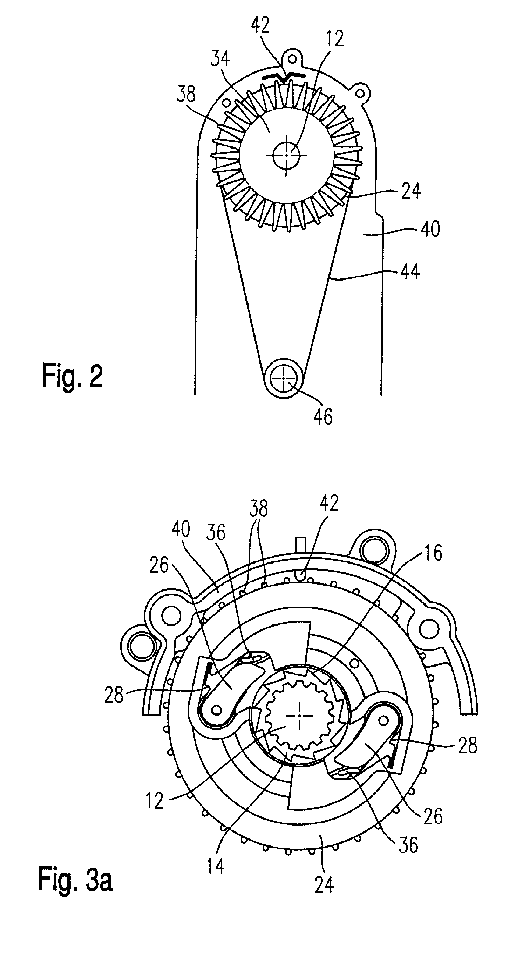

In Figur 2 ist eine Seitenansicht des Gurtaufrollers dargestellt. Der Gurtaufroller hat einen Rahmen 40 mit einem Anschlagelement 42, der so positioniert ist, daß die Zahnelemente 38 der Kupplungsscheibe 34 mit dem Anschlagelement zusammenwirken können. Das Rad 24 ist über einen Riemen 44 mit der Motorachse 46 eines (nicht dargestellten) Elektromotors verbunden, wodurch eine optimale Kraftübertragung von der Motorachse 46 auf das Rad erfolgen kann.

In den Figuren 3a bis 3d ist der Gurtaufroller in Seitenansicht in verschiedenen Betriebspositionen dargestellt.

Im folgenden soll anhand der Figuren 3a bis 3d die Funktionsweise des Gurtaufrollers dargestellt werden.

In der Ausgangsposition (Figur 3a) werden die Klinken 26 durch die Rückstellfedern 28 so zurückgehalten, daß sie nicht in Eingriff mit der Außenverzahnung 16 des Zahnrings 14 sind. In diesem Fall kann sich die Gurtspule 10 frei drehen (Figur 1) und Gurtband von der Gurtspule abgezogen werden.

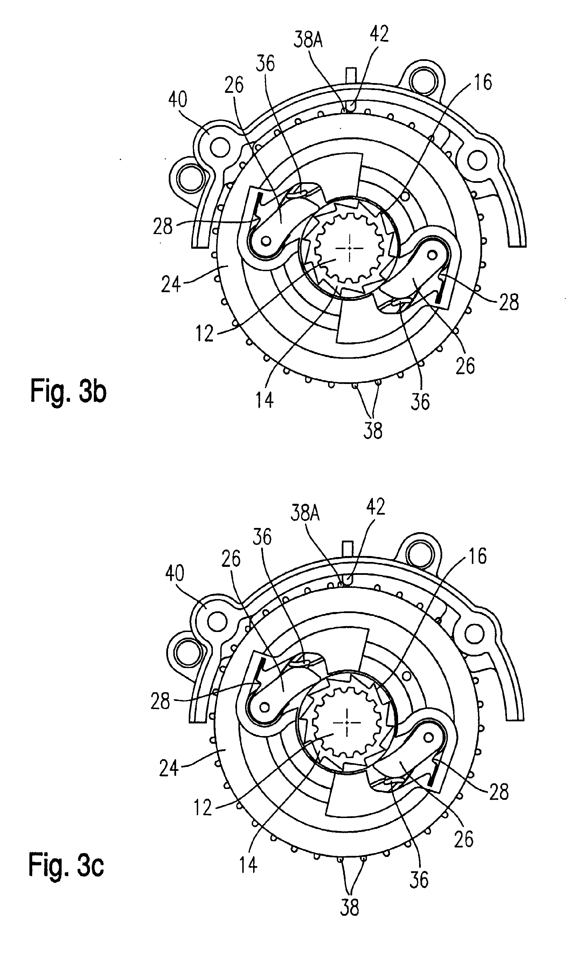

Läuft der Motor an, so wird das Rad 24 mit Hilfe des Riemens 44 bezüglich der Figuren 3a bis 3d im Uhrzeigersinn gedreht (siehe auch Figur 2). Die über die Verbindungselemente 36 mitgeführte und sich deshalb anfangs mitdrehende Kupplungsscheibe 34 erreicht bereits nach Durchlaufen eines kleinen Drehwinkels mit einem der Zahnelemente 38A das Anschlagelement 42. Die Bewegung der Kupplungsscheibe wird dadurch gestoppt, woraus eine Relativbewegung zwischen dem Rad 24 und der Kupplungsscheibe 34 resultiert. Diese führt dazu, daß die Klinken 26 über die Verbindungselemente 36 der Kupplungsscheibe aus ihrer Ruhestellung verschwenkt werden (Figur 3b).

Bei fortgesetzter Drehung des Rads 24 durch den Motor wird die Kupplungsscheibe 34 weiter durch den Kontakt des Zahnelements 38A mit dem gehäusefesten Anschlagelement 42 angehalten, wobei sich das flexible Zahnelement 38A immer mehr durchbiegt (Figur 3c). Die Klinken 26 werden dabei über die Verbindungselemente 36 der Kupplungsscheibe 34 weiter auf den Zahnring 14 hin verschwenkt.

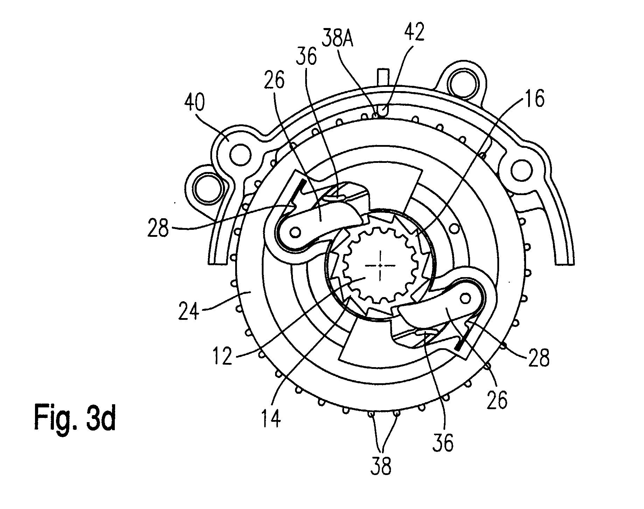

Wenn der Motor das Rad 24 gegenüber der Ausgangsposition um ca. 20° verdreht hat, sind die beiden Klinken 26 gegen die Kraft der Rückstellfedern 28 so weit verschwenkt, daß sie in Eingriff mit dem Zahnring 14 gelangen (Figur 3d). Nun hat auch das flexibel ausgeführte Zahnelement 38A eine Position erreicht, in der es das Anschlagelement 42 überwinden kann. Bei weiterer Drehung des Rades 24 läuft die Kupplungsscheibe 34 nun wieder synchron mit dem Rad 24 mit, und die flexiblen Zahnelemente 38 werden über das gehäusefeste Anschlagelement hinweggezogen.

Zum Lösen der Rutschkupplung 22 muß das Rad 24 mit Hilfe des Motors bezüglich der Figuren 3a bis 3d im Gegenuhrzeigersinn gedreht werden, die Kupplungsscheibe 34 bleibt gegenüber dem Rad zurück, und die Verbindungselemente 36 werden so geführt, daß die Klinken 26 mittels der Rückstellfedern 28 wieder in ihre Ausgangsposition gelangen.

## Patentansprüche

1. Gurtaufroller für einen Fahrzeugsicherheitsgurt, mit einem Rahmen (40), einer Gurtspule (10), die in dem Rahmen drehbar gelagert ist, einer Gurtspulenachse (12) mit einer Außenverzahnung (16), und einer Klinke (26), **dadurch gekennzeichnet, daß** der Gurtaufroller eine Rutschkupplung (22) aufweist, durch die die Klinke in die Außenverzahnung eingesteuert werden kann, um die Gurtspule zu drehen.

2. Gurtaufroller nach Anspruch 1, **dadurch gekennzeichnet, daß** der Rahmen (40) ein Anschlagelement (42) und die Rutschkupplung (22) ein Rad (24) und eine Kupplungsscheibe (34) mit mehreren Zahnelementen (38) aufweist, und daß eines der Zahnelemente mit dem Anschlagelement so zusammenwirken kann, daß dabei eine Relativdrehung zwischen der Kupplungsscheibe und dem Rad herbeigeführt werden kann.

3. Gurtaufroller nach Anspruch 1 oder 2, **dadurch gekennzeichnet, daß** die Klinke (26) in dem Rad (24) gelagert ist und durch die Relativdrehung zwischen der Kupplungsscheibe (34) und dem Rad in die Außenverzahnung (16) eingesteuert werden kann, um die Gurtspule (10) zu drehen.

4. Gurtaufroller nach Anspruch 3, **dadurch gekennzeichnet, daß** das Rad (24) mit einem Motor gekoppelt ist.

5. Gurtaufroller nach Anspruch 4, **dadurch gekennzeichnet, daß** der Motor ein Elektromotor ist.

6. Gurtaufroller nach einem der vorhergehenden Ansprüche, **dadurch gekennzeichnet, daß** das Rad (24) direkt mit dem Motor gekoppelt ist.

7. Gurtaufroller nach einem der vorhergehenden Ansprüche, **dadurch gekennzeichnet, daß** das Rad (24) über einen Riemen (44) mit dem Elektromotor gekoppelt ist.

8. Gurtaufroller nach einem der vorhergehenden Ansprüche, **dadurch gekennzeichnet, daß** das Rad (24) ein Zahnrad ist.

9. Gurtaufroller nach einem der vorhergehenden Ansprüche, **dadurch gekennzeichnet, daß** die Gurtspulenachse (12) drehfest mit einem Zahnring (14) verbunden ist und der Zahnring die Außenverzahnung (16) aufweist.
